# EUROPEAN PATENT SPECIFICATION

(11) **EP 1 737 710 B1**
(45) Date of publication and mention of the grant of the patent: **13.05.2009**
(21) Application number: 05728108.1
(22) Date of filing: 22.03.2005
(51) Int. Cl.: B60R 22/14, B60R 22/00, B60N 2/28

(54) **SHOULDER PAD FOR VEHICLE SEAT BELT**
SCHULTERPOLSTER FÜR FAHRZEUGSITZGURT
COUSSINET DE PROTECTION DE L'EPAULE POUR CEINTURE DE SECURITE D'UN VEHICULE

(30) Priority: 25.03.2004 GB 0406829
(43) Date of publication of application: 03.01.2007
(73) Proprietor: BRITAX RÖMER Kindersicherheit GmbH, D-89077 Ulm (DE)
(72) Inventor: WETTER, Hermann, 89075 Ulm (DE)
(74) Representative: Suèr, Steven Johannes
(86) International application number: PCT/IB2005/000997
(87) International publication number: WO 2005/092677

(56) References cited:
- EP-A- 1 338 485
- DE-U1- 8 808 298
- US-A1- 2003 046 750

## Description

The present invention relates to a shoulder pad for a belt of a vehicle seat, particularly though not exclusively a child's safety seat, in which the seat belt forms part of the seat's harness.

Such a shoulder pad is adapted to be mounted on the seat belt for engagement with the shoulder of a user so as to increase the friction between the seat belt and the user's shoulder.

When a vehicle is subject to an accident involving impact from the front, the shoulders of occupants who are retained by seat belts tend to slide forwards relative to the shoulder straps of their seat belts. This results in the heads of such occupants moving forwards relative to the car body, with the possible result of making damaging contact with some part of the car body in front of their seats. It has been proposed to reduce this forward movement by providing shoulder pads on the seat belt shoulder straps that have the effect of increasing the friction between the seat belt and the occupant's clothing. However, in the initial phase of an accident, this can have the effect of subjecting the occupant's neck to unacceptably high forces.

DE8808298U1 discloses pressure pads for a seat belt, the pads being of varying width and being attached to the belt in pairs with a gap therebetween. The gap prevents the belt from touching a wearer's body in that area thus alleviating pressure on that area (for example in a pressure-sensitive area).

It is an object of the invention to provide an improved safety system comprising a seat belt and a shoulder pad.

According to the present invention there is provided a safety system comprising a seat belt and a shoulder pad provided to the seat belt, whereby in use the shoulder pad is mounted on a wearer's side of the seat belt, characterised in that the pad presents a substantially continuous contact area with a wearer from their shoulder area to a mid-torso area, the pad's thickness, in the dimension of the pad orthogonal to the plane of the seat belt, increasing gradually from a first zone intended for location against the wearer's shoulder to a second zone intended for location at a lower height against a lower part of the wearer's torso, when in use and the wearer is seated in a normal an substantially erect position.

Preferably the pad further comprises a thin substrate bearing a series of projections of progressively increasing height between the ends of the pad body.

Preferably the pad further includes a tether portion to connect the pad to a vehicle seat, the tether portion being at the end of the pad adjacent to the first zone.

Preferably the pad includes a tether of doubled back length of narrow strapping.

Preferably the body is formed from synthetic rubber.

Preferably the shoulder pad includes a tapering portion, which includes the two zones, the tapering portion also comprising said thin substrate bearing a series of projections of progressively increasing height.

Preferably the substrate has a thickness in the range 0.5 to 1.5 mm.

More preferably the substrate has a thickness of 1.0 mm.

Preferably the smaller projections in the first (thinner) zone are 3 to 5 mm thick and the greater projections in the second (thicker) zone are 8 to 12 mm.

More preferably the smaller projections in the first (thinner) zone are 4 mm thick, giving a total thickness of substrate and projection of 5 mm, and the greater projections in the second (thicker) zone are 10 mm thick, giving a total thickness of substrate and projection of 11 mm.

Preferably the pad body is attached to peripheral stitching for a tether for connecting the pad to a vehicle seat.

To help understanding of the invention, a specific embodiment thereof will now be described by way of example and with reference to the accompanying drawings, in which:
Figure 1 is a side view of a child safety seat having a harness including a shoulder strap which is fitted with a shoulder pad in accordance with the invention;
Figure 2 is a perspective view of the shoulder pad shown in Figure 1 from the side abutting the child's shoulder in use;
Figure 3 is a perspective view of the pad shown in Figure 2 from the other side;
Figure 4 is a plan view corresponding to Figure 3 of the shoulder pad;
Figure 5 is a side view of the shoulder pad shown in Figures 2 to 4;
Figure 6 is a plan view corresponding to Figure 2 of the shoulder pad;
Figure 7 is a side view, similar to Figure 1, after an initial phase of an accident;
Figure 8 is a side view, similar to Figures 1 and 7, but after subsequent further movement during an accident.

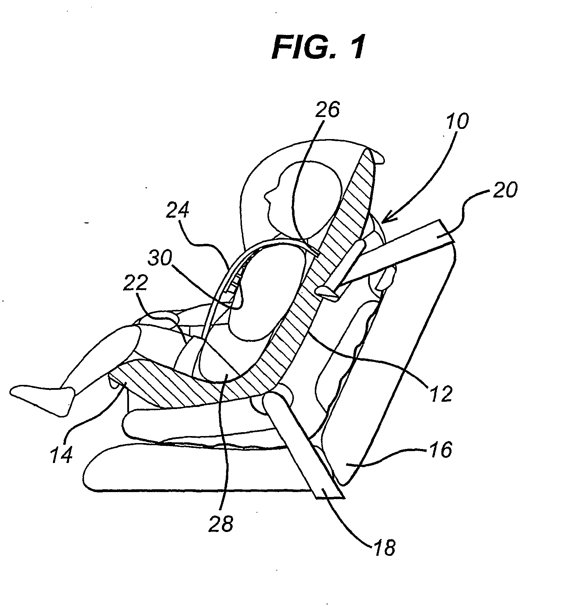

Figure 1 shows a child seat 10 having a seat back 12 and a seat portion 14. The child seat 10 is secured on a vehicle seat 16 by means of the lap strap 18 and shoulder strap 20 of a vehicle seat belt. The child seat 10 is equipped with a harness having lap straps 22 and a pair of shoulder straps 24, each of which projects through a respective slot 26 in the seat back 12. The harness restrains a child 28 occupying the seat 10. A shoulder pad 30 in accordance with the invention, is carried on each shoulder strap 24 .

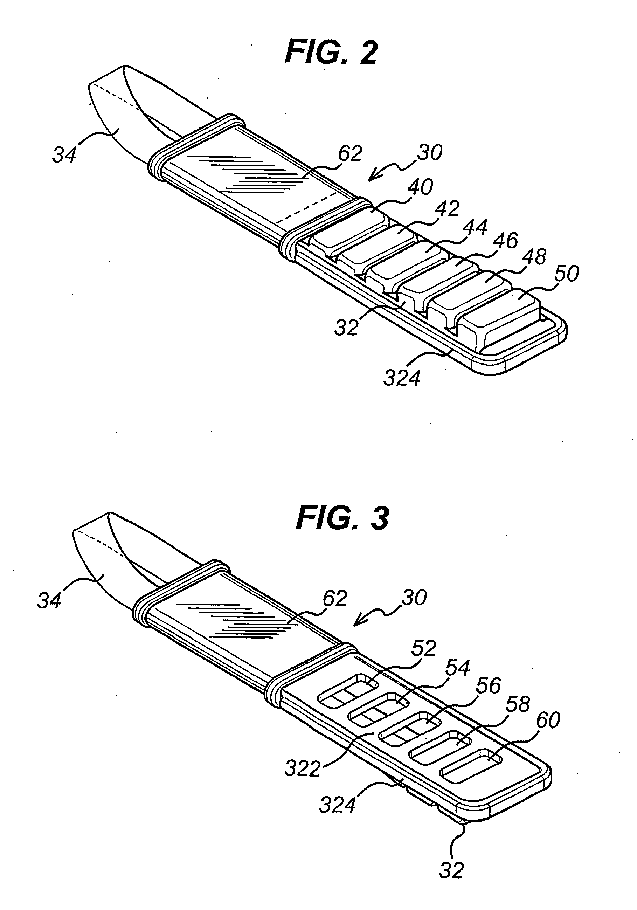

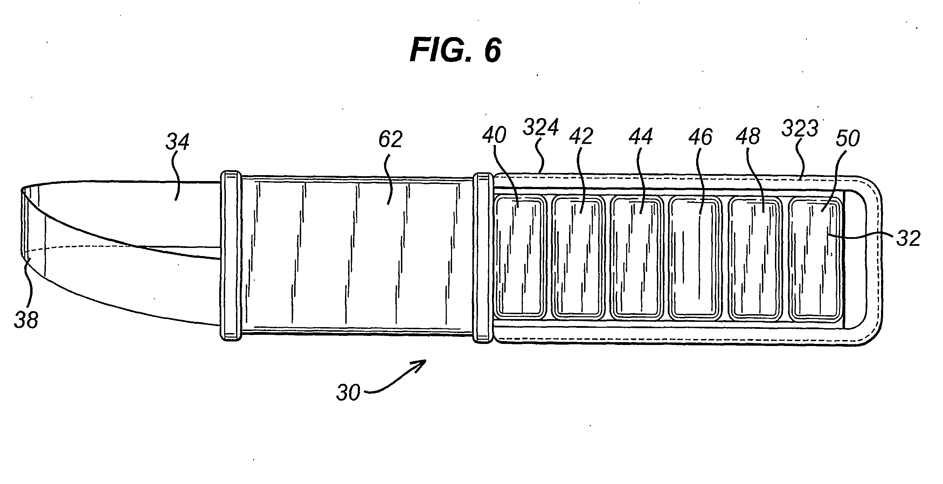

Referring to Figures 2 to 6, each of the shoulder pads 30 comprises a body 32 formed from stiff resilient material such as synthetic rubber and a perforate retaining strip 322. These are stitched 323 together peripherally, with an edge or binding tape 324 . A tether in the form of a doubled back length of narrow strapping 34 is also stitched in, between the body 32 and the retaining strip 322 by the stitching 323. The strapping tether extends from a point 36 mid-way along the body 32 and out of the top end of body and the retaining strip. It passes through sleeve 62, which is also stitched to the strapping. Beyond the sleeve, the tether is arranged on top of the shoulder strap 24 and passes through the slot 26 in the seat back where it is secured by means of a bar (not shown) received in the bight 38 in the tether. The shoulder strap is able to pass freely through the shoulder pad except insofar as both are restrained behind the slot 26.

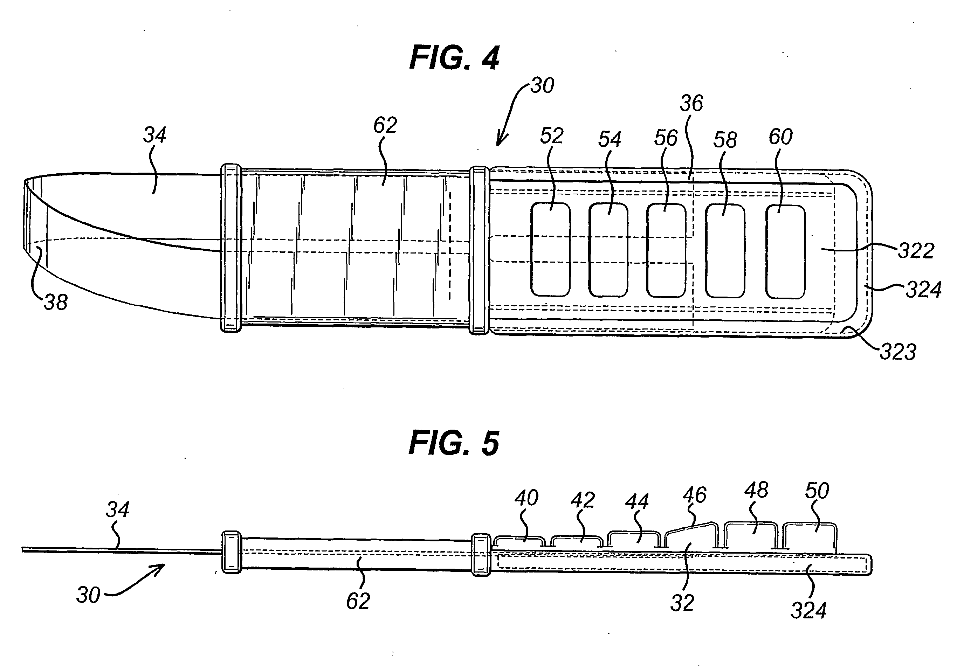

As can best be seen in Figures 2 and 5, the side of the body 32 of the pad facing the child occupant 28 comprises six projections 40 to 50 of thickness that increases progressively from the end from which the tether strap 34 projects. The body is moulded with a relatively dense substrate, typically 1mm thick, whilst the projections are less dense and extend from the substrate by 4mm to 10mm. On the side opposite to the projections 40 to 50, i.e. the side of the shoulder strap opposite from the projections, the perforate retaining strip 322has a series of five openings 52 to 60 which serve the purpose of increasing the flexibility of the perforate retaining strip 322.

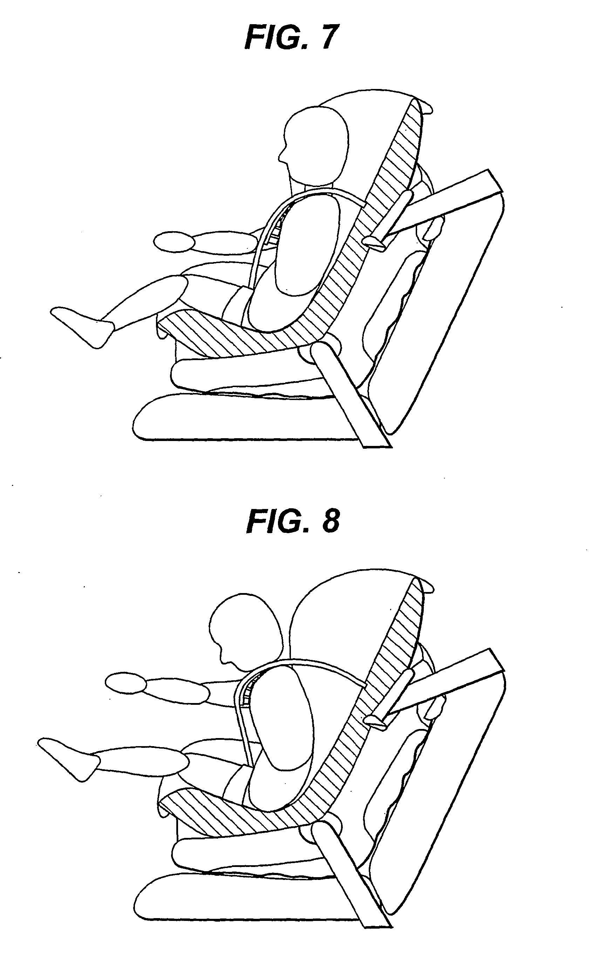

Referring again to Figure 1, the shoulder pad 30 is positioned on the shoulder strap 24 with the thinner projections 40 and 42 in contact with the shoulder of the child 28 and the thicker projections 48 and 50 in contact with the child's chest. As can be seen from Figure 7 in an initial phase of an accident, the friction provided by these relatively thin projections is insufficient to prevent the child's torso from bending forward, thereby reducing the load on the child's neck.

During a subsequent phase of the accident, the tether 34 pulls the thicker projections 46, 48 and 50 on to the child's shoulder, as shown in Figure 8. The resulting increased friction between the shoulder pad and the child's clothes and increased tension in the shoulder straps 24 are sufficient to reduce further forward movement of the child's torso and therefore reduce the total forward movement of the child's head.

## Claims

1. A safety system comprising a seat belt (24) and a shoulder pad (30) provided to the seat belt, whereby in use the shoulder pad is mounted on a wearer's side of the seat belt, **characterised in that** the pad presents a substantially continuous contact area with a wearer (28) from their shoulder area to a mid-torso area, the pad's thickness, in the dimension of the pad orthogonal to the plane of the seat belt, increasing gradually from a first zone intended for location against the wearer's shoulder to a second zone intended for location at a lower height against a lower part of the wearer's torso, when in use and the wearer is seated in a normal an substantially erect position.

2. A safety system as claimed in claim 1, wherein the pad (30) further comprises a thin substrate bearing a series of projections (40, 42, 44, 46, 48, 50) of progressively increasing height between the ends of the pad body (32).

3. A safety system as claimed in any preceding claim, the pad (30) further including a tether portion (34) to connect the pad to a vehicle seat (16), the tether portion being at the end of the pad adjacent to the first zone.

4. A safety system as claimed in claim 3, including a tether of doubled back length of narrow strapping.

5. A safety system as claimed in any preceding claim, wherein the pad body (32) is formed from synthetic rubber.

6. A safety system as claimed in claim 2, wherein the shoulder pad (30) includes a tapering portion, which includes the two zones, the tapering portion also comprising said thin substrate bearing a series of projections of progressively increasing height.

7. A safety system as claimed in claim 6, wherein the substrate has a thickness in the range 0.5 to 1.5 mm.

8. A safety system as claimed in claim 6 or 7, wherein the substrate has a thickness of 1.0 mm.

9. A safety system as claimed in claim 6, 7 or 8, wherein the smaller projections in the first (thinner) zone are 3 to 5 mm thick and the greater projections in the second (thicker) zone are 8 to 12 mm.

10. A safety system as claimed in claim 9, wherein the smaller projections in the first (thinner) zone are 4 mm thick, giving a total thickness of substrate and projection of 5 mm, and the greater projections in the second (thicker) zone are 10 mm thick, giving a total thickness of substrate and projection of 11 mm.

11. A safety system as claimed in any one of claims 6 to 10, wherein the pad body (32) is attached to peripheral stitching for a tether for connecting the pad to a vehicle seat.

12. A child car safety carrier using the shoulder pad as claimed in any previous claim.

## Patentansprüche

1. Ein Sicherheitssystem bestehend aus einem Fahrzeugsitzgurt (24) und einem Schulterpolster (30), das am Sitzgurt vorgesehen ist, wobei das Schulterpolster, wenn in Gebrauch, an der Seite des Trägers des Sitzgurts angebracht ist, **dadurch** ausgezeichnet, dass das Polster eine mehr oder weniger fortlaufende Kontaktfläche mit dem Träger (28) von dessen Schulterbereich bis zum Bereich der Oberkörpermitte liefert, wobei die Dicke des Polsters, was die Dimension des Polsters orthogonal zur Sitzebene betrifft, allmählich von einer ersten Zone, die gegen die Schulter des Trägers anliegen soll, bis zu einer zweiten Zone, die weiter unten gegen den unteren Teil des Oberkörpers des Trägers anliegen soll, wenn es in Gebrauch ist und der Träger in einer normalen und mehr oder weniger aufrechten Position sitzt, allmählich zunimmt.

2. Ein Sicherheitssystem nach Anspruch 1, wobei das Polster (30) zudem ein dünnes Trägermaterial aufweist, auf dem sich eine Reihe von Profilen (40, 42, 44, 46, 48, 50) befindet, deren Höhe zwischen des Enden des Hauptteils des Polsters (32) allmählich zunimmt.

3. Ein Sicherheitssystem nach den vorhergehenden Ansprüchen, bei dem zum Polster (30) zudem ein Haltegurtteil (34) gehört, damit das Polster mit einem Fahrzeugsitz (16) verbunden werden kann, wobei das Haltegurtteil am Ende des Polsters an die erste Zone anschließt.

4. Ein Sicherheitssystem nach Anspruch 3, zu dem ein Haltegurt aus einer verdoppelten Länge eines schmalen Gurts gehört.

5. Ein Sicherheitssystem nach den vorhergehenden Ansprüchen, bei dem das Hauptteil des Polsters (32) aus einem synthetischen Gummimaterial gebildet wird.

6. Ein Sicherheitssystem nach Anspruch 2, wobei zum Schulterpolster (30) ein zulaufender Abschnitt gehört, zu dem zwei Zonen gehören, wobei der zulaufende Abschnitt zudem aus dem genannten dünnen Trägermaterial besteht, das eine Reihe von Profilen von allmählich zunehmender Höhe enthält.

7. Ein Sicherheitssystem nach Anspruch 6, bei dem das Trägermaterial eine Dicke im Bereich von 0,5 bis 1,5 mm hat.

8. Ein Sicherheitssystem nach Anspruch 6 oder 7, bei dem das Trägermaterial eine Dicke von 1,0 mm hat.

9. Ein Sicherheitssystem nach Anspruch 6, 7, oder 8, bei dem die kleineren Profile in der ersten (dünneren) Zone 3 bis 5 mm dick sind, und die größeren Profile in der zweiten (dickeren) Zone 8 bis 12 mm dick sind.

10. Ein Sicherheitssystem nach Anspruch 9, bei dem die kleineren Profile in der ersten (dünneren) Zone 4 mm dick sind, was eine Gesamtdicke von Trägermaterial und Profil von 5 mm ergibt, und die größeren Profile in der zweiten (dickeren) Zone 10 mm dick sind, was eine Gesamtdicke von Trägermaterial und Profil von 11 mm ergibt.

11. Ein Sicherheitssystem nach den vorhergehenden Ansprüchen 6 bis 10, bei dem das Hauptteil des Polsters (32) an Randversteppung für einen Haltegurt befestigt ist, damit das Polster an einem Fahrzeugsitz angebracht werden kann.

12. Ein Kindersicherheitssträger, bei dem das Schulterpolster entsprechend der vorhergehenden Ansprüche verwendet wird.

## Revendications

1. Système de sécurité comprenant une ceinture de sécurité de siège (24) et une épaulière (30) prévue sur la ceinture de sécurité, selon lequel à l'usage l'épaulière est montée du côté d'un porteur de la ceinture de sécurité, **caractérisé en ce que** l'épaulière présente une surface de contact sensiblement continue avec un porteur (28) depuis la région de son épaule jusqu'à la région du milieu du torse, l'épaisseur de l'épaulière, dans la dimension de l'épaulière à angle droit avec le plan de la ceinture de sécurité, augmentant progressivement depuis une première zone prévue pour se situer contre l'épaule du porteur jusqu'à une deuxième zone prévue pour se situer plus bas, contre une partie plus basse du torse du porteur, quand elle est en usage et que le porteur est assis en position normale sensiblement droite.

2. Système de sécurité conforme à la revendication 1, où l'épaulière (30) comprend en outre un mince substrat portant une série de protubérances (40, 42, 44, 46, 48, 50) dont la hauteur augmente progressivement entre les extrémités du corps de l'épaulière (32).

3. Système de sécurité conforme à une quelconque des revendications précédentes, l'épaulière (30) comprenant de plus une partie d'attache (34) pour relier l'épaulière à un siège automobile (16), la partie d'attache étant située à l'extrémité de l'épaulière adjacente à la première zone.

4. Système de sécurité conforme à la revendication 3, comprenant une attache constituée par une longueur de sangle étroite repliée sur elle-même.

5. Système de sécurité conforme à une quelconque des revendications précédentes, où le corps de l'épaulière (32) est fabriqué en caoutchouc synthétique.

6. Système de sécurité conforme à la revendication 2, où l'épaulière (30) comporte une partie fuselée, qui comprend les deux zones, la partie fuselée comprenant également ledit substrat mince portant une série de protubérances dont la hauteur augmente progressivement.

7. Système de sécurité conforme à la revendication 6, où le substrat a une épaisseur dans une plage allant de 0,5 à 1,5 mm.

8. Système de sécurité conforme à la revendication 6 ou 7, où le substrat a une épaisseur de 1,0 mm.

9. Système de sécurité conforme à la revendication 6, 7 ou 8, où les plus petites protubérances, dans la première zone (la plus mince), ont une épaisseur de 3 à 5 mm et les plus grandes protubérances, dans la deuxième zone (plus épaisse), ont de 8 à 12 mm.

10. Système de sécurité conforme à la revendication 9, où les plus petites protubérances, dans la première zone (la plus mince), ont une épaisseur de 4 mm, ce qui donne une épaisseur totale, pour le substrat et la protubérance, de 5 mm, et les plus grandes protubérances, dans la deuxième zone (plus épaisse), ont une épaisseur de 10 mm, ce qui donne une épaisseur totale, pour le substrat et la protubérance, de 11 mm.

11. Système de sécurité conforme à une quelconque des revendications 6 à 10, où le corps de l'épaulière (32) est attaché à une couture périphérique pour une attache destinée à relier l'épaulière à un siège automobile.

12. Fauteuil automobile de sécurité pour enfant utilisant l'épaulière conforme à une quelconque des revendications précédentes.
